# EUROPEAN PATENT APPLICATION

(11) **EP 1 574 145 A1**
(43) Date of publication of application: **14.09.2005**
(21) Application number: 04015056.7
(22) Date of filing: 26.06.2004
(51) Int. Cl.: A43C 11/14, B29D 31/515, A63C 9/00

(54) **Ratchet belt of binder for sports**

(30) Priority: 09.03.2004 KR 2004015691
(71) Applicant: Ellim Corporation Limited, Incheon (KR)
(72) Inventor: Lee, Jong Gu, Kwanak-gu Seoul (KR)
(74) Representative: Weitzel, Wolfgang

(57) **Abstract**

The present invention relates to a ratchet belt for sports capable of providing an abrasion prevention part for preventing a toothed part of a ratchet belt from being worn away due to a repeated use in a ratchet belt capable of fixing boots to a binder by tightening in a step-by-step manner based on a tooth interval of a ratchet belt when a user wears a sports binder, and a buckle is tightened. The ratchet belt for sports comprises a concave and convex shaped ankle in which a slope surface slanted similarly with a slanted surface of the ratchet belt or slanted more than the same and a roughly upright surface are repeatedly formed, wherein said ankle is press-formed, and the ankle is insert-formed, so that a part of the upper side of the upright surface is exposed to the outside and is directly engaged with an engaging protrusion of the buckle.

## Description

### BACKGROUND OF THE INVENTION

### 1. Field of the Invention

The present invention relates to a ratchet belt for sports, and in particular to a ratchet belt for sports capable of providing an abrasion prevention part for preventing a toothed part of a ratchet belt from being worn away due to a repeated use in a ratchet belt. The ratchet belt is capable of fixing boots to a binder by tightening in a step-by-step manner based on a tooth interval of a ratchet belt when a buckle is tightened for a user to wear a binder for sports. There are various kinds of ratchet belts adapted for a binder for sports. The present invention relates to a belt formed of a polyurethane material wherein a ratchet belt having a toothed surface of an upper surface of the same is inserted into an inner side of a buckle, and the buckle is engaged with the teeth in a step-by-step manner as a ratchet belt is tightened. The tooth type ratchet belt is adapted to a snowboard, ski, a roller skate, an inline skate, etc.

### 2. Description of the Background Art

Generally, a user who enjoys a snowboard fixes boots to a binder for a snowboard. In a fixing method, a user mounts boots in the interior of a binder and adjusts a buckle, so that the boots are stably engaged by being tightened to teeth of a belt. After fixing boots to the binder, the user can snowboard.

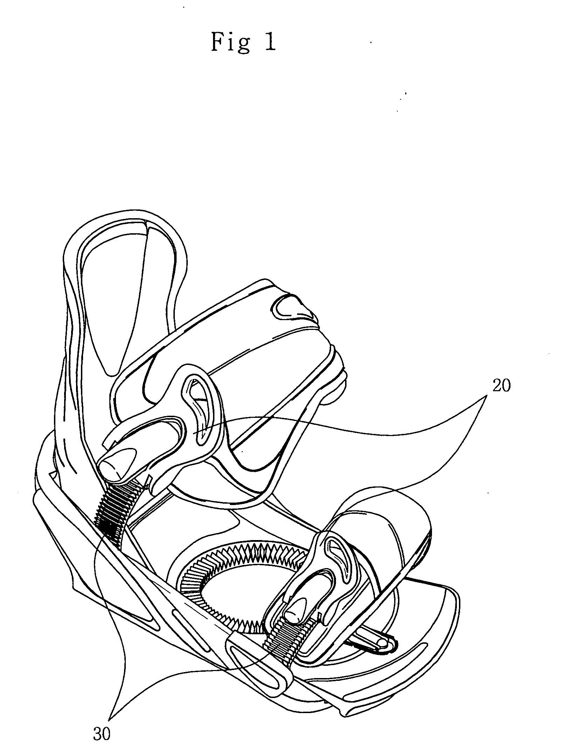

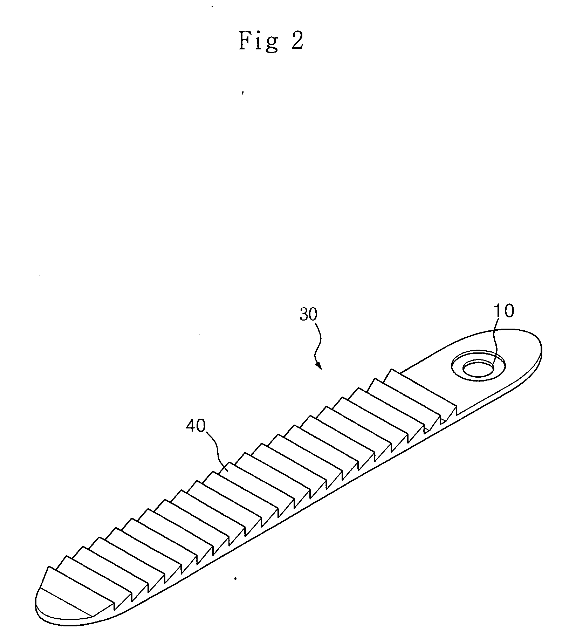

Figure 1 is a view illustrating the construction of a conventional binder for sports, and Figure 2 is a view illustrating the construction of a ratchet belt. As shown therein, one end of the ratchet belt has an engaging hole 10 and is engaged to a certain portion of the binder in a state that it is stably fixed by a fixing member, and the other end of the same is inserted into an inner side of the ratchet type buckle 20, so that the belt 30 is tightened based on the size of user's feet. In addition, teeth 40 are formed on the upper surface of the belt 30. As the user tightens the belt 30 by adjusting the buckle 20, the teeth 40 are engaged, and the belt 30 is tightened, and the user's feet are stably mounted in the interior of the binder.

In the conventional ratchet belt 30, when the user snowboard for a long time, the teeth of a certain portion fixing the boots of the user based on the buckle 20 may be intensively worn away. In the rental binder, there may be some differences in the portion of the teeth fixed based on the sizes of user's feet or ankle, but mostly the teeth of a certain portion may be intensively worn away, so that the fixing force is decreased.

In the case that the user rides the snowboard with the binder fixed by the belt having a decreased fixing force, since the user's feet are not stably fixed by the snowboard, the user may feel uncomfortable. In addition, the user cannot enjoy a high-speed riding. In particular, in the case that the user's feet are disengaged from the binder, a big accident may occur.

Therefore, the worn-away belt is periodically checked and exchanged with a new belt for thereby maintaining a certain fixing force. In this case, only three or four teeth are worn away. However, when exchanging the worn-away belt with a new belt, the non-worn teeth are generally exchanged together. Therefore, it is non-economical and inefficient.

### SUMMARY OF THE INVENTION

Accordingly, it is an object of the present invention to provide a binder for sports capable of overcoming the problems encountered in the conventional art.

It is another object of the present invention to provide a binder for sports capable of permanently using a binder for sports by forming an abrasion prevention part in a teeth part of a belt that frequently contacts with a buckle.

To achieve the above objects, in a binder operating as an apparatus in which a ratchet belt having a plurality of teeth formed on an upper surface of the same is engaged to a ratchet type buckle having an engaging protrusion, wherein a slanted surface is formed in one side of teeth of a ratchet belt, and a vertical surface is formed in the other side of the teeth, and a ratchet belt is not escaped from a buckle in such a manner that an engaging protrusion is caught by the vertical surface, and the length of the ratchet belt is adjusted in a step-by-step method by tightening the buckle, there is provided an improved ratchet belt for sports, comprising a concave and convex shaped ankle in which a slope surface slanted similarly to a slanted surface of the ratchet belt or slanted more than the same and a roughly upright surface are repeatedly formed, wherein the ankle is press-formed, and the ankle is insert-formed, so that a part of the upper side of the upright surface is exposed to the outside and is directly engaged with an engaging protrusion of the buckle.

In addition, a plurality of holes are formed in the slope surface, so that the upper and lower surfaces of the ankle communicate with each other, and the ankle is stably fixed to the ratchet belt through the holes.

The ratchet belt is injected with a polyurethane material, and the slope surface is inwardly curved, so that the polyurethane is stacked thickly on an upper surface of the ankle.

To achieve the above objects, in a binder operating as an apparatus in which a ratchet belt having a plurality of teeth formed on an upper surface of the same is engaged to a ratchet type buckle having an engaging protrusion, wherein a slanted surface is formed in one side of teeth of a ratchet belt, and a vertical surface is formed in the other side of the teeth, and a ratchet belt is not escaped from a buckle in such a manner that an engaging protrusion is caught by the vertical surface, and the length of the ratchet belt is adjusted in a step-by-step method by tightening the buckle, there is provided an improved ratchet belt for sports, comprising a concave and convex shaped ankle in which a slope surface slanted similarly to a slanted surface of the ratchet belt and a roughly upright surface are repeatedly formed, wherein the ankle is press-formed and insert-injected, and one side of the slope surface is inwardly bent for thereby forming a certain space, and a hole is formed in a center portion of the same, and the upper and lower surfaces of the ankle communicate each other through the hole, and an injection material is filled in the space of the interior of the bent portion, so that the ankle is stably fixed to the ratchet belt.

To achieve the above objects, in a binder operating as an apparatus in which a ratchet belt having a plurality of teeth formed on an upper surface of the same is engaged to a ratchet type buckle having an engaging protrusion, wherein a slanted surface is formed in one side of teeth of a ratchet belt, and a vertical surface is formed in the other side of the teeth, and a ratchet belt is not escaped from a buckle in such a manner that an engaging protrusion is caught by the vertical surface, and the length of the ratchet belt is adjusted in a step-by-step method by tightening the buckle, there is provided an improved ratchet belt for sports, comprising an abrasion prevention part in which a slope surface and upright surface similar to the slanted surface and a vertical surface are repeatedly formed on an upper surface, and the slope surface and the upright surface are engaged with the engaging protrusion of the buckle, wherein the abrasion prevention part is provided in one side of the center of the belt.

The abrasion prevention part is insert-injected for thereby forming a ratchet belt, and a plurality of engaging grooves are formed on a slope surface of the abrasion prevention part, and an engaging rod is integrally formed with the ratchet belt at a portion corresponding to the engaging groove, and the engaging rod is engaged with the engaging groove.

An engaging protrusion is provided at a front end and rear end of the abrasion prevention part, respectively, so that the abrasion prevention part is inserted to the ratchet belt.

The ratchet belt is formed of a polyurethane material, and the abrasion prevention part is formed of plastic such as polypropylene.

### BRIEF DESCRIPTION OF THE DRAWINGS

The present invention will become better understood with reference to the accompanying drawings which are given only by way of illustration and thus are not limitative of the present invention, wherein;
Figure 1 is a perspective view illustrating the constructions of a ratchet belt and a strap of a binder for sports in a conventional art;
Figure 2 is a perspective view illustrating the construction of a ratchet belt of a binder in a conventional art;
Figure 3 is a perspective view illustrating the construction of a binder for sports according to the present invention;
Figures 4A and 4B are a perspective view and a cross sectional view illustrating the construction that a metallic thin plate is inserted into the interior of a ratchet belt for enhancing a durability of a surface of a threaded part according to a first embodiment of the present invention;
Figure 4C is a perspective view illustrating the construction of a metallic thin plate according to the present invention;
Figures 5A and 5B are a perspective view and a cross sectional view illustrating the construction that another type of a metallic thin plate is inserted into the interior of a ratchet belt according to a second embodiment of the present invention;
Figure 5C is a perspective view illustrating the construction of a metallic thin plate according to the present invention;
Figures 6A and 6B are a perspective view and a cross sectional view illustrating the construction which further comprises an abrasion prevention part at the center portion of the ratchet belt according to a third embodiment of the present invention; and
Figure 6C is a perspective view illustrating the construction of an abrasion prevention part according to the present invention.

### DETAILED DESCRIPTION OF THE PREFERRED EMBODIMENTS

The preferred embodiments of the ratchet belt of a binder for sports according to the present invention will be described with reference to the accompanying drawings.

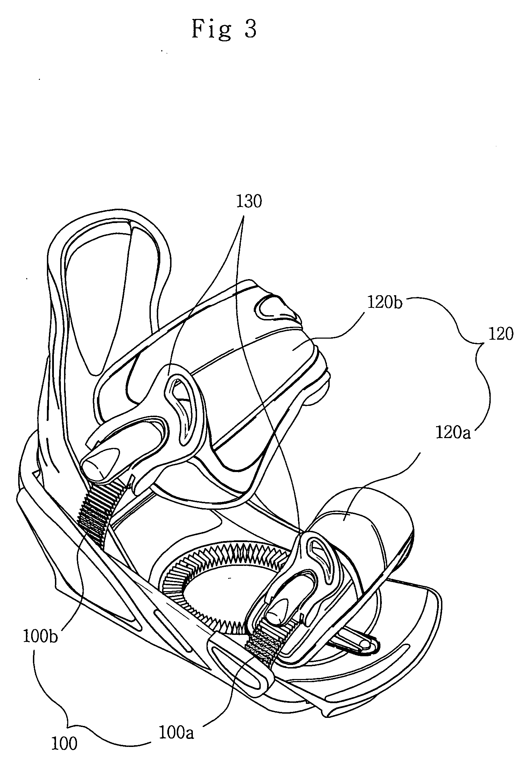

Figure 3 is a perspective view illustrating the construction of a binder for sports according to the present invention. As shown therein, a teeth part formed of a plurality of teeth is formed on the whole upper surfaces of a front shaft fixing belt 100a and a rear shaft fixing belt 100b. A ratchet type buckle 130 is engaged to one side of each upper surface of a front shaft strap 120a and a rear shaft strap 120b. The front shaft belt 100a and the rear shaft belt 100b are engaged to the front shaft strap 120a and the rear shaft strap 120b by the ratchet type buckle 130, respectively.

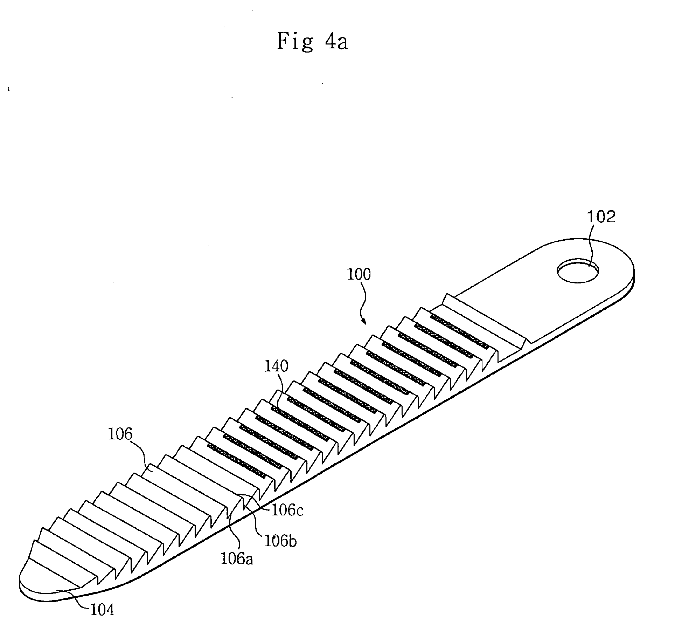

The preferred embodiment of the ratchet according to the present invention will be described with reference to the accompanying drawings. Various examples of the ratchet belt according to the present invention are shown in Figures 4A through 6C.

In the present invention, one end of the ratchet belt 100 includes an engaging hole 102 and is engaged with the binder, and the other end of the same includes an entrance part 104 passing through the ratchet type buckle 130. A plurality of teeth parts 106 are formed on the center upper surface and are directly engaged with the ratchet type buckle 130.

The teeth parts 106 are composed of a slanted surface 106a which is slanted in the direction of the entrance part and gradually tightens the ratchet type buckle 130 and a vertical surface 106b which is contacted with engaging protrusion (not shown) of the ratchet type buckle 130 and operates as a stopper in order to prevent the ratchet type buckle 130 from retracting. A boundary surface 106c between the slanted surface 106a and the vertical surface 106b is rounded for thereby enhancing a smooth movement of the buckle 130.

In the conventional art, the ratchet belt is formed of a polyurethane material and is divided into two or three parts. The divided parts are engaged using a certain connection part, such as a fixing pin, etc. Here, since the material of polyurethane is easily worn away, the center portion intensively contacting with the buckle is exchanged, for thereby preventing the teeth parts from being worn away.

To achieve the above matter, the applicant of the present invention filed the Korean patent application No. 2003-45234. However, it is not needed to fabricate exchangeable elements and assemble the same in such a manner that only the center part frequently contacting with the buckle is formed of a certain material strong with respect to abrasion.

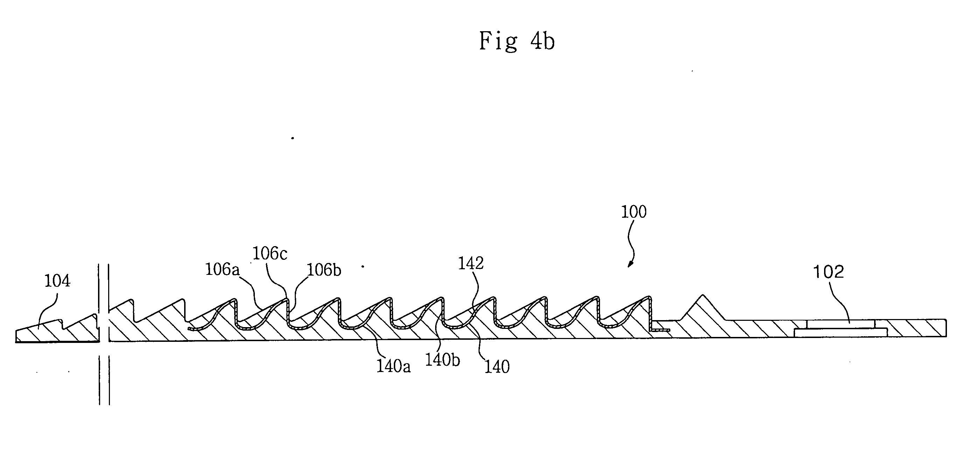

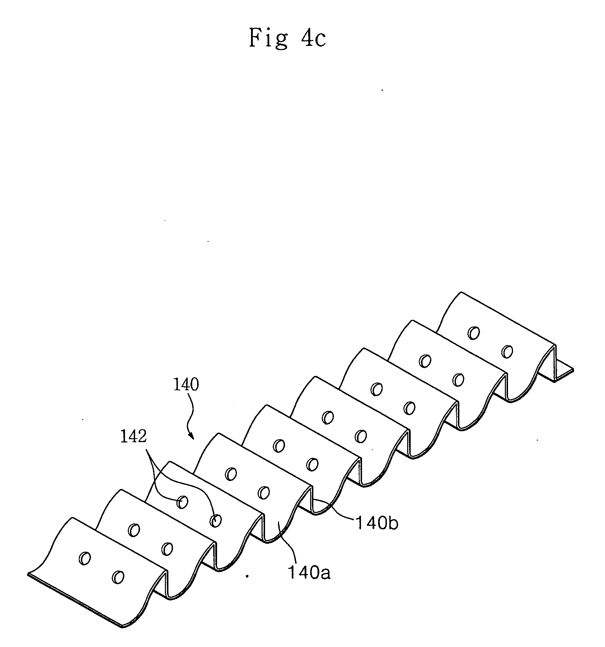

Figures 4A and 4B are a perspective view and a cross sectional view illustrating the construction that a metallic thin plate is inserted into the interior of a ratchet belt for enhancing a durability of a surface of a threaded part according to a first embodiment of the present invention, and Figure 4C is a perspective view illustrating the construction of a metallic thin plate according to the present invention.

As shown therein, first, a steel plate is cut into metallic thin plates each having a certain length. The thusly-cut metallic thin plate is pressed in a shape in which a slant surface 140a and an upright surface 140b are repeatedly formed, for thereby forming an ankle 140. At this time, the slope surface 140a of the ankle is slanted more than the slanted surface 106a of the ratchet belt 100 and is inwardly curved. The boundary surface between the slope surface 140a and the upright surface 140b is rounded for thereby corresponding to the boundary surface 106c of the ratchet belt. A plurality of first holes 142 are formed in the slope surface 140a symmetrically at left and right sides.

Therefore, when the ratchet belt 100 is formed in such a manner that the ankle 140 is inserted, and polyurethane is injected, a certain amount of polyurethane is stacked on a curved portion of the slope surface 140a. The polyurethane passes through the first holes 142, and the upper and lower surfaces of the ankle 140 communicate with each other. The ankle 140 is stably fixed to the upper and lower surfaces of the ratchet belt 100.

In particular, since the upper side of the upright surface 140b of the ankle 140 is directly engaged with an engaging protrusion (not shown) of the ratchet type buckle 130, the upper side is more easily worn away. Therefore, the upper side of the upright surface 140b is formed in such a manner that a part of the same is exposed to the outside of the ratchet belt 100.

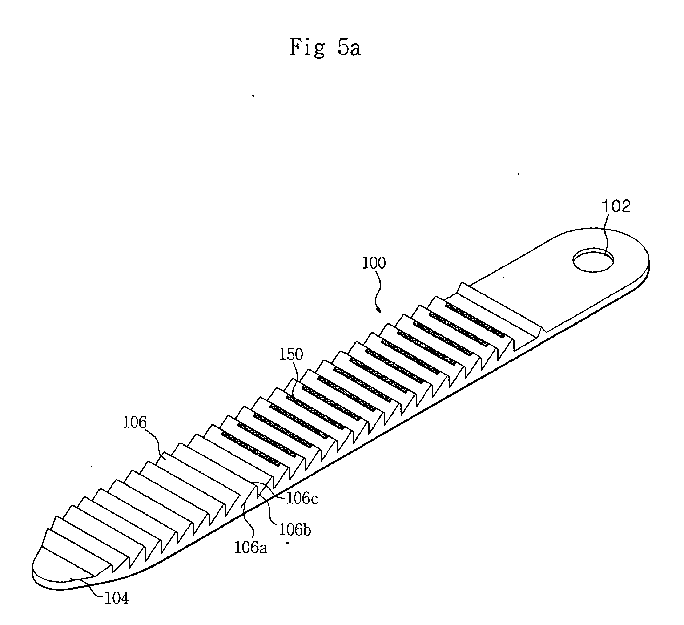

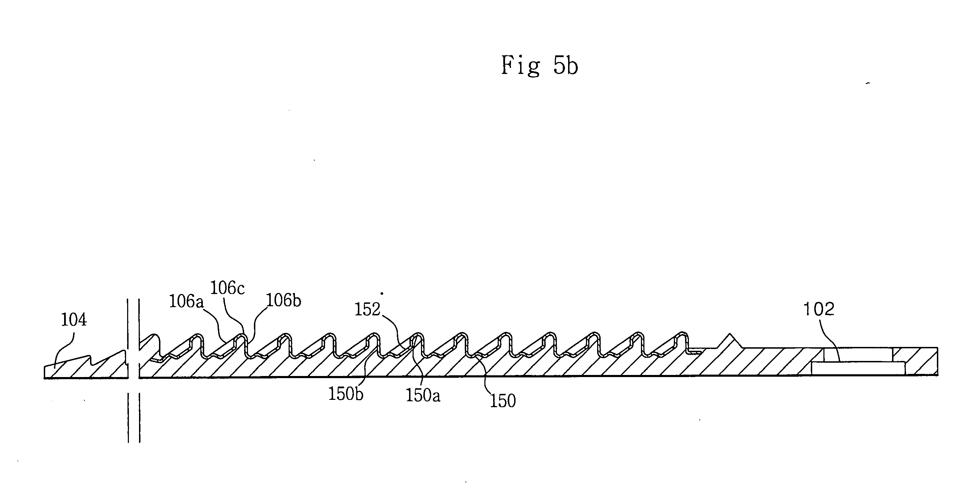

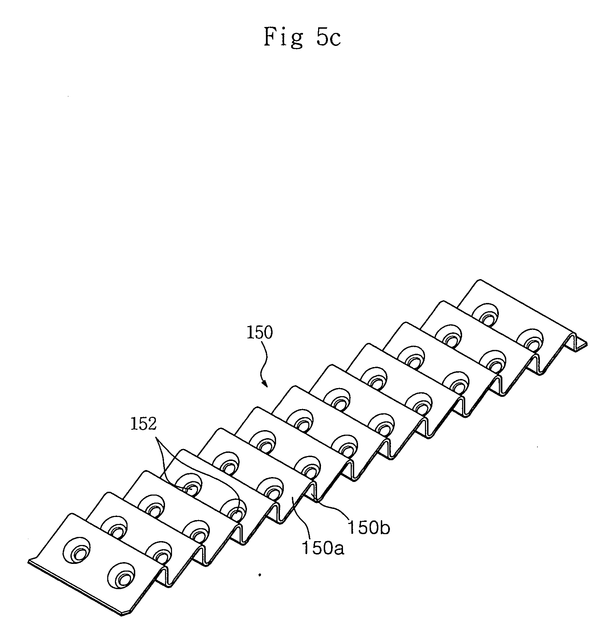

Figures 5A and 5B are a perspective view and a cross sectional view illustrating the construction according to a second embodiment of the present invention in which a slope surface of a metallic thin plate is bent differently from the first embodiment of the present invention, and Figure 5C is a perspective view illustrating the construction of a metallic thin plate according to the present invention.

The second embodiment of the present invention is the same as the first embodiment of the present invention. Namely, the metallic thin plate is repeatedly pressed in a concave and convex shape in such a manner that the slope surface 150a and the upright surface 150b are repeatedly formed. However, in the second embodiment of the present invention, the slope surface 150a is slanted to coincide with the slanted surface 106a of the ratchet belt 100. The slope surface 150a is inwardly bent, and the second hole 152 is formed at the center portion. Therefore, the upper and lower sides of the ankle 150 communicate through the second hole 152. The polyurethane is filled into the interior of the bent part, so that the ankle 150 is more stably fixed to the ratchet belt 100.

In the first and second embodiments of the present invention, since the ankle pressed using metallic thin plate is inserted into the interior of the ratchet belt, and a part of the same is exposed to the vertical surface of the teeth, it is possible to prevent friction in maximum due to a contact with the buckle.

In another method, an abrasion prevention part having a good durability is further formed in one side of the center of the ratchet belt.

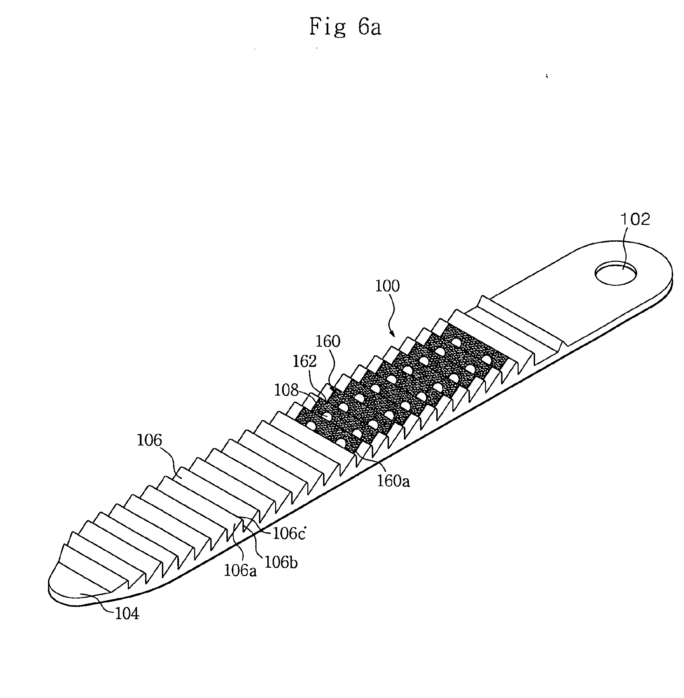

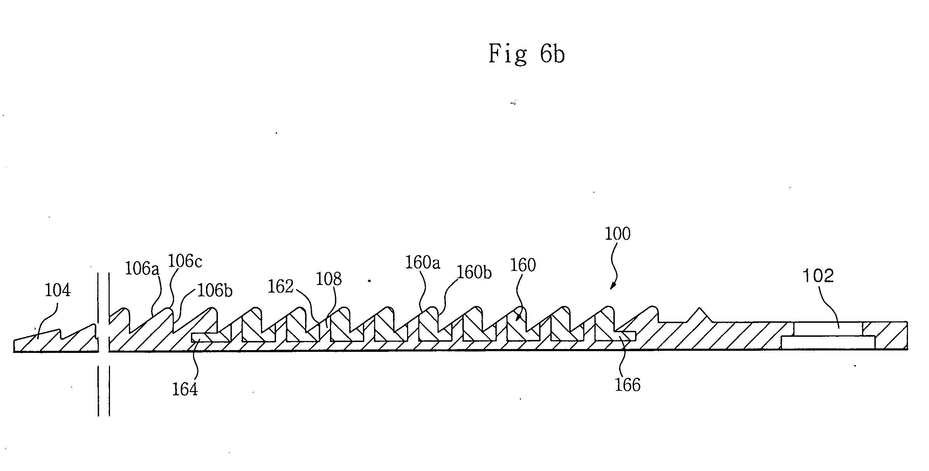

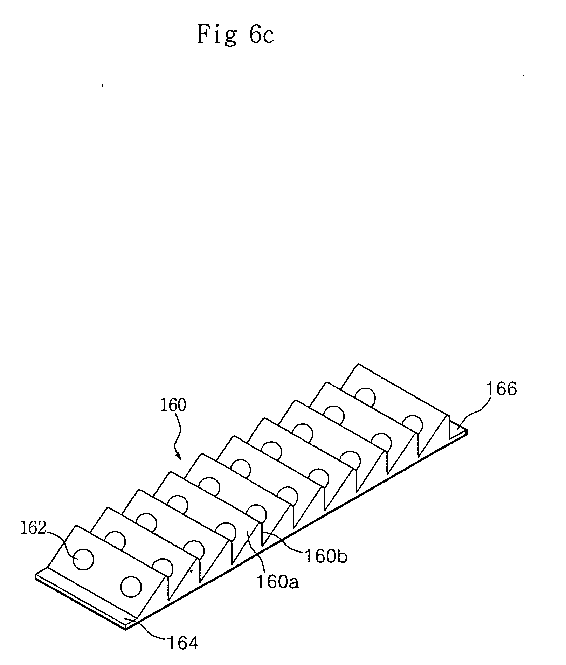

Figures 6A and 6B are a perspective view and a cross sectional view illustrating the construction of the ratchet belt which could be used semi-permanently without exchange by reinforcing material which prevents abrasion at the center of the ratchet belt according to a third embodiment of the present invention, and Figure 6C is a perspective view illustrating the construction of an abrasion prevention part according to the present invention.

An abrasion prevention part 160 formed of a plastic material such as polypropylene, etc. is separately formed. The ratchet belt 100 is fabricated in such a manner that the abrasion prevention part 160 is inserted, and polyurethane is injected. In the abrasion prevention part 160, the slope surface 160a and the upright surface 160b are provided in the portion corresponding to the slanted surface 106a and the vertical surface 160b of the ratchet belt 100 and frequently contact with the engaging protrusion of the buckle 130.

At this time, an engaging groove 162 is formed in the abrasion prevention part 160 so that the abrasion prevention part 160 is stably engaged with the ratchet belt 100, and an engaging rod 108 is formed in the ratchet belt corresponding to the engaging groove 162. In addition, the engaging steps 164 and 166 are formed at the front and rear ends of the abrasion prevention part 160, so that the abrasion prevention part 160 is stably engaged with the ratchet belt 100.

In the present invention, the abrasion prevention part 160 is formed in a rectangular shape, but the construction of the abrasion prevention part 160 is not limited thereto. Namely, any shape construction, except for a rectangular shape, capable of preventing abrasion in such a manner that the abrasion prevention part 160 of synthetic resin is mounted on the ratchet belt 100 of polyurethane and that the abrasion prevention part 160 and the ratchet belt 100 are engaged, may be adapted.

Therefore, in the third embodiment of the present invention, since the portion that receives fixing force is formed of plastic material such as polypropylene, the strength is much higher than the conventional belt of polyurethane material, so that it is possible to achieve an excellent fixing force. The durability is enhanced.

In the present invention, there is further provided an abrasion prevention part having an excellent durability and anti-abrasion property in such a manner that a concave and convex shaped ankle in which a slanted surface and a vertical surface are repeatedly formed, is inserted at one side of the ratchet belt frequently contacting with the ratchet buckle. In the present invention, only the ratchet belt having teeth formed of polyurethane material used for the binder of snowboard is described as an exampled, but various modification and applications may be implemented in sports as well as other fields unless the technical scope of the present invention is not damaged.

As described above, the following effects are obtained in the present invention.

Only the portion frequently contacting with the buckle is reinforced by the abrasion prevention part, so that customer's demands are satisfied. Therefore, the reliability and satisfaction with respect to the products are achieved. It is possible to permanently use the product without exchanging the ratchet belt. The cost of material is decreased.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In a binder operating as an apparatus in which a ratchet belt having a plurality of teeth formed on an upper surface of the same is engaged to a ratchet type buckle having an engaging protrusion, wherein a slanted surface is formed in one side of teeth of a ratchet belt, and a vertical surface is formed in the other side of the teeth, and a ratchet belt is not escaped from a buckle in such a manner that an engaging protrusion is caught by the vertical surface, and the length of the ratchet belt is adjusted in a step-by-step method by tightening the buckle, an improved ratchet belt for sports, comprising:
a concave and convex shaped ankle in which a slope surface slanted similarly to a slanted surface of the ratchet belt or slanted more than the same and a roughly upright surface are repeatedly formed, wherein said ankle is press-formed, and the ankle is insert-formed, so that a part of the upper side of the upright surface is exposed to the outside and is directly engaged with an engaging protrusion of the buckle.

2. The belt of claim 1, wherein a plurality of holes are formed in the slope surface, so that the upper and lower surfaces of the ankle communicate with each other, and the ankle is stably fixed to the ratchet belt through the holes.

3. The belt of either claim 1 or claim 2, wherein said ratchet belt is injected with a polyurethane material, and the slope surface is inwardly curved, so that the polyurethane is stacked thickly on an upper surface of the ankle.

4. In a binder operating as an apparatus in which a ratchet belt having a plurality of teeth formed on an upper surface of the same is engaged to a ratchet type buckle having an engaging protrusion, wherein a slanted surface is formed in one side of teeth of a ratchet belt, and a vertical surface is formed in the other side of the teeth, and a ratchet belt is not escaped from a buckle in such a manner that an engaging protrusion is caught by the vertical surface, and the length of the ratchet belt is adjusted in a step-by-step method by tightening the buckle, an improved ratchet belt for sports, comprising:
a concave and convex shaped ankle in which a slope surface slanted similarly to a slanted surface of the ratchet belt and a roughly upright surface are repeatedly formed, wherein said ankle is press-formed and insert-injected, and one side of the slope surface is inwardly bent for thereby forming a certain space, and a hole is formed in a center portion of the same, and the upper and lower surfaces of the ankle communicate each other through the hole, and an injection material is filled in the space of the interior of the bent portion, so that the ankle is stably fixed to the ratchet belt.

5. In a binder operating as an apparatus in which a ratchet belt having a plurality of teeth formed on an upper surface of the same is engaged to a ratchet type buckle having an engaging protrusion, wherein a slanted surface is formed in one side of teeth of a ratchet belt, and a vertical surface is formed in the other side of the teeth, and a ratchet belt is not escaped from a buckle in such a manner that an engaging protrusion is caught by the vertical surface, and the length of the ratchet belt is adjusted in a step-by-step method by tightening the buckle, an improved ratchet belt for sports, comprising:
an abrasion prevention part in which a slope surface and upright surface having a construction similar to the slanted surface and a vertical surface, respectively, are repeatedly formed on an upper surface, and the slope surface and the upright surface are engaged with the engaging protrusion of the buckle, wherein the abrasion prevention part is provided in one side of the center of the belt.

6. The belt of claim 5, wherein said abrasion prevention part is insert-injected for thereby forming a ratchet belt, and a plurality of engaging grooves are formed on a slope surface of the abrasion prevention part, and an engaging rod is integrally formed with the ratchet belt at a portion corresponding to the engaging groove, and the engaging rod is engaged with the engaging groove.

7. The belt of either claim 5 or claim 6, wherein an engaging steps are provided at a front end and rear end of the abrasion prevention part, respectively, so that the abrasion prevention part is inserted to the ratchet belt.

8. The belt of either claim 5 or claim 6, wherein said ratchet belt is formed of a polyurethane material, and said abrasion prevention part is formed of plastic such as polypropylene.
